(19) Europäisches Patentamt / European Patent Office / Office européen des brevets

(11) **EP 2 485 404 B1**

(12) **EUROPEAN PATENT SPECIFICATION**

(45) Date of publication and mention
of the grant of the patent:
**03.10.2018 Bulletin 2018/40**

(21) Application number: **10819832.6**

(22) Date of filing: **29.06.2010**

(51) Int Cl.:
**H04B 1/7103** *(2011.01)*     **H04B 1/711** *(2011.01)*

(86) International application number:
**PCT/CN2010/074669**

(87) International publication number:
**WO 2011/038603 (07.04.2011 Gazette 2011/14)**

(54) **METHOD AND DEVICE FOR AMPLITUDE CALCULATING USED FOR SIGNAL RECONSTRUCTION**

VERFAHREN UND VORRICHTUNG ZUR AMPLITUDENBERECHNUNG ZUR SIGNALWIEDERHERSTELLUNG

PROCÉDÉ ET DISPOSITIF DE CALCUL D'AMPLITUDE UTILISÉS POUR LA RECONSTRUCTION D'UN SIGNAL

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.09.2009 CN 200910179708**

(43) Date of publication of application:
**08.08.2012 Bulletin 2012/32**

(73) Proprietor: **ZTE Corporation
Shenzhen, Guangdong 518057 (CN)**

(72) Inventors:
• **WANG, Chao
Shenzhen
Guangdong 518057 (CN)**
• **LIANG, Yan
Shenzhen
Guangdong 518057 (CN)**

(74) Representative: **Novagraaf Technologies
Bâtiment O2
2, rue Sarah Bernhardt
CS90017
92665 Asnières-sur-Seine Cedex (FR)**

(56) References cited:
EP-A1- 1 962 449       CN-A- 1 377 535
CN-A- 1 734 967        CN-A- 101 161 012
CN-A- 101 258 702      CN-A- 101 667 847
US-A1- 2008 205 328    US-A1- 2008 205 329

## Description

### Field of the Invention

The present invention relates to the communication field, and in particular to a method and an apparatus for signal reconstruction.

### Background of the Invention

WCDMA (Wideband Code Division Multiple Access), as a 3rd generation mobile communication system, has the capability of providing greater system capacity and more flexible data transmission with high-rate and multi-rate, and can further transmit active images with high quality in addition to voice and data transmission. Wireless communication system and mobile communication environment become more complicated while diversified services are supported and system performance is significantly improved. WCDMA and CDMA (Code Division Multiple Access) depend on character codes to distinguish users, and this technology causes two problems, i.e. multipath interference and multiple access interference, wherein the multiple access interference is divided into two categories of inter-cell interference and intra-cell interference. In order to overcome the multipath interference, the character codes need to have good auto-correlation characteristics; and in order to overcome multiple access interference, the character codes need to have good cross-correlation characteristics. However, auto-correlation and cross-correlation cannot be good simultaneously, and whatever technology used can only reduce the influences of multipath interference and multiple access interference which cannot be eliminated radically.

In order to overcome the multiple access interference, technologies such as Rake (RAKE) receiver, multi-user detection, etc. can be used. RAKE receiver is to complete multipath separation and combination function, and the restriction capability of RAKE receiver to the multiple access interference depends on the cross-correlation characteristics between different user character codes. As the information of other users, such as the correlation characteristics between users, is known, the multi-user detection makes the best of the inherent structure information of WCDMA user character codes to improve system performance. Typical multi-user detection algorithms comprise linear decorrelation algorithm and interference cancellation algorithm, wherein the linear decorrelation algorithm detects the information of a plurality of users simultaneously by estimating a correlation matrix between the users; and the interference cancellation algorithm cancels the interference signals and then carries out signal detection. By the multi-user detection, system capacity can be improved and the influence of near-far effect can be reduced. However, the operation of linear decorrelation algorithm is complicated and its implementation is rather difficult; and linear decorrelation algorithm can only be used for improving the performance of uplink and only suitable for being used at the base station but cannot overcome the intra-cell interference. Therefore, it is rather necessary to focus on developing the potential of the interference cancellation algorithm.

The introduction of the interference cancellation technology is mainly due to that E-DCH (Enhanced-Dedicated Channel) is introduced into HSUPA (High Speed Uplink Packet Access) of WCDMA system. In addition to maintain normal voice service, at the same time, the interference cancellation technology can provide high speed data service, and consequently brings the multi-user detection problem mentioned above. Since the peak of HSUPA of single user can be up to 5.76 Mbps, which requires the transmitter to improve transmission power. For example, Release 99 (R99) service only needs to work at -20 dB to reach the working point, while HSUPA working point may be at about 4 dB, which is a very strong noise undoubtedly, and R99 is totally drown in the noise and almost cannot be distinguished. In addition to the influence of multipath fading, the orthogonality between code channels and users becomes worse, and the performance of physical channel may deteriorate with the reducing of spreading factor. Under such situation, conventional RAKE receiver cannot meet the performance requirement, and interference cancellation technology is introduced to solve this problem.

The interference cancellation technology can cancel the users with HSUPA channels as strong interference in the antenna data before demodulating the R99 users, and the demodulating and decoding for other users can benefit from the data on which interference cancellation has been carried out. Under ideal situation, if every known code channel can be reconstructed accurately, then the gain of interference cancellation would be embodied to the greatest extent.

A signal reconstruction method is provided in the related art. By the method, the signals are reconstructed according to channel estimation values, frequency deviation estimation values and other relevant parameters.

The inventors have found that the signal reconstruction method in the related art does not take into account that the transmit powers of HS-DPCCH (High Speed-Dedicated Physical Control Channel), E-DPCCH (Enhanced-Dedicated Physical Control Channel), and E-DPDCH (Enhanced-Dedicated Physical Data Channel) may have deviation relative to DPCCH (Dedicated Physical Data Channel). In this case, if channel estimation of DPCCH is used to reconstruct signal, the accuracy of signal reconstruction may be rather poor, which is disadvantageous for cancelling interference.

The patent document (US 2008/205329 A1) relates to a method of scaling soft symbols of an uplink enhanced dedicated transport channel (E-DCH). The patent document (EP 1962449 A1) relates to a system and method for adjusting the amplitude of the data for channel decoding in a CDMA system.

## Summary of the Invention

The present invention provides a method and an apparatus for signal reconstruction, which can solve the problem in the related art that if channel estimation of DPCCH is used to reconstruct signal, the accuracy of signal reconstruction may be rather poor, which is disadvantageous for cancelling interference.

In order to achieve the above objective, one aspect of the present invention is to provide a method for signal reconstruction, as defined in appended claim 1. Another aspect of the present invention is to provide an apparatus for signal reconstruction as defined in appended claim 4.

Preferably, in the above method, calculating the amplitude of the enhanced dedicated physical data channel according to the first amplitude average value and the second amplitude average value comprises: calculating a quotient by dividing second amplitude average value by the first amplitude average value; and looking-up the Bed/Bc amplitude table in protocol 25.213 according to the quotient to calculate the amplitude of the enhanced dedicated physical data channel.

Preferably, in the above method, carrying out signal reconstruction according to the channel estimation value and the frequency deviation estimation value of the dedicated physical control channel, the result of the second information bit after spreading and scrambling and the amplitude of the enhanced dedicated physical data channel comprises the steps of:

carrying out spreading and scrambling to the enhanced dedicated physical data channel according to the second information bit and spreading and scrambling information of the enhanced dedicated physical data channel; and calculating the reconstructed signal by filtering the data after spreading and scrambling with the channel estimation value, the frequency deviation estimation value of the dedicated physical control channel, and the amplitude of the enhanced dedicated physical data channel.

Preferably, in the above apparatus, the looking-up module includes: a quotient calculating unit for calculating a quotient by dividing the second amplitude average value by the first amplitude average value; and an amplitude table looking-up unit for looking-up the Bed/Bc amplitude table according to the quotient to calculate the amplitude of the enhanced dedicated physical data channel.

Preferably, in the above apparatus, the interference estimating module is used for carrying out spreading and scrambling to the enhanced dedicated physical data channel according to the second information bit and spreading and scrambling information of the enhanced dedicated physical data channel; and calculating the reconstructed signal by filtering the data after spreading and scrambling with the channel estimation value, the frequency deviation estimation value of the dedicated physical control channel, and the amplitude of the E-DPDCH.

In the above embodiments, firstly a first depolarized soft symbol and a first amplitude average value of DPCCH are calculated, then a second depolarized soft symbol and a second amplitude average value of E-DPDCH are calculated, finally an amplitude of the E-DPDCH is calculated according to the first amplitude average value and second amplitude average value, and thereby signal reconstruction is carried out according to the amplitude of the E-DPDCH. Since the amplitudes of the DPCCH and the E-DPDCH already have deviation when they are transmitted at the transmitter, soft symbols received by the receiver are used to estimate the amplitudes thereof, and this method can also be used for the amplitude calculation under more application scenarios, so the adaptability and accuracy rate of amplitude calculation can be improved and the accuracy rate of signal reconstruction and the performance of interference cancellation can be improved. Therefore, the problem in the related art that, if channel estimation of DPCCH is used to reconstruct signal, the accuracy of signal reconstruction may be rather poor, which is disadvantageous for cancelling interference, is solved.

## Brief Description of the Drawings

The drawings illustrated here provide a further understanding of the present invention and form a part of the present application. The exemplary embodiments and the description thereof are used to explain the present invention without unduly limiting the scope of the present invention, wherein:

Fig. 1 is a flow chart of a method for signal reconstruction according to a first embodiment of the present invention;
Fig. 2 is a schematic diagram of interference cancellation according to a second embodiment of the present invention;
Fig. 3 is a flow chart of a method for signal reconstruction according to a third embodiment of the present invention; and
Fig. 4 is a structural diagram of an apparatus for signal reconstruction according to a fourth embodiment of the present invention.

**Detailed Description of Embodiments**

The present invention will be described hereinafter in detail with reference to the drawings and in conjunction with the embodiments.

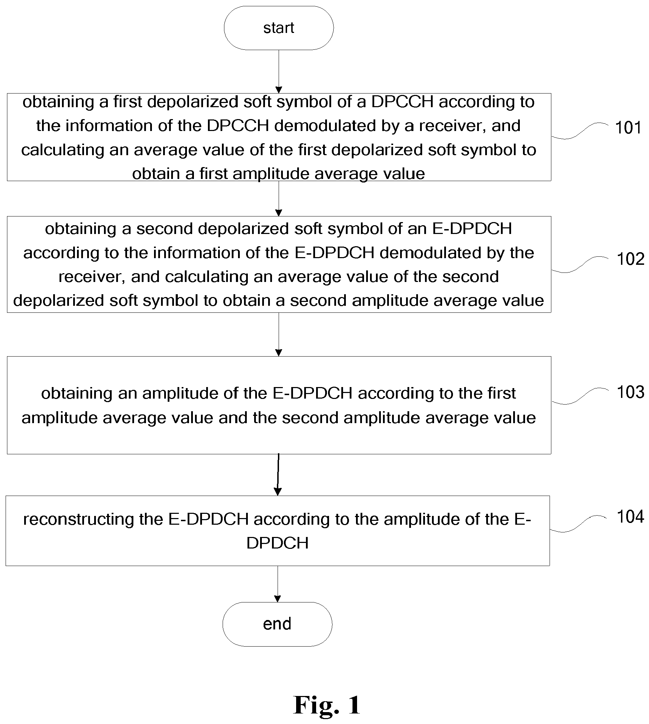

Fig. 1 is a flow chart of a method for signal reconstruction according to a first embodiment of the present invention, and this method includes the following steps:

Step 101: calculating a first depolarized soft symbol of a DPCCH according to the information of the DPCCH demodulated by a receiver, and calculating an average value of the first depolarized soft symbol to calculate a first amplitude average value;

Step 102: calculating a second depolarized soft symbol of an E-DPDCH according to the information of the E-DPDCH demodulated by the receiver, and calculating an average value of the second depolarized soft symbol to calculate a second amplitude average value;

Step 103: calculating an amplitude of the E-DPDCH (also can be called amplitude ratio value, or amplitude offset) according to the first amplitude average value and the second amplitude average value;

In this step, the division operation of the first amplitude average value and the second amplitude average value can be carried out, and the result of the division operation is used as the amplitude of the E-DPDCH. The amplitude of the E-DPDCH is calculated by looking-up a Bed/Bc amplitude table in protocol 25.213 according to the first amplitude average value and the second amplitude average value.

Step 104: reconstructing the E-DPDCH according to the amplitude of the E-DPDCH.

In the above embodiment, firstly a first depolarized soft symbol and a first amplitude average value of DPCCH are calculated, then a second depolarized soft symbol and a second amplitude average value of E-DPDCH are calculated, finally an amplitude of the E-DPDCH is calculated according to the first amplitude average value and second amplitude average value, and thereby signal reconstruction is carried out. Since the amplitudes of the DPCCH and the E-DPDCH already have deviation when they are transmitted at the transmitter, soft symbols received by the receiver are used to estimate the amplitudes thereof, and this method can also be used for the amplitude calculation under more application scenarios, so the adaptability and accuracy rate of amplitude calculation can be improved and the accuracy rate of signal reconstruction and the performance of interference cancellation can be improved. Therefore, the problem in the related art that, if channel estimation of DPCCH is used to reconstruct signal, the accuracy of signal reconstruction may be rather poor, which is disadvantageous for cancelling interference, is solved.

The method for amplitude calculation of this embodiment is suitable for WCDMA system and any communication system with signal reconstruction.

In the WCDMA system, the signals received by the receiver carry the information of channels after demodulation and before hard decision. The information carried by these signals can be used to estimate the channel environment suffered by the signals during transmission, and the signals received by the antenna receiver beforehand can be restored by making the data go through this channel environment and the data can be removed from the antenna data. This channel environment is embodied in the amplitude of reconstruction signals, and the data after demodulation and the amplitude are restored to signals. The information used for channel estimation, frequency deviation estimation, SIR (Signal Interference Ratio) estimation, etc. at the receiver is from the DPCCH channel, and the reconstructed E-DPDCH channel has deviation with the DPCCH channel in respect of amplitude, so there must be deviation when the information calculated using the DPCCH channel is used for reconstructing the E-DPDCH channel. Considering the above problems, the difference between the DPCCH channel and other channels in respect of amplitude needs to be calculated as accurate as possible. In the WCDMA system, according to protocol 25.213, the power ratio Bed/Bc of E-DPDCH and DPCCH is already fixed, and the power value given in the protocol can be used directly when reconstructing theoretically. However, in a real system, if the user is at the edge of a cell, the quality of the user received by a base station may decline, so the system may increase the transmission power all the time from the command fed back by Transmission Power Control (abbreviated as TPC). When the user reaches the maximum power, the transmit power will not be increased but conversely the power ratio between E-DPDCH to DPCCH will be compressed. Under such scenario, using the ideal Bed/Bc given by the protocol to reconstruct will cause the reconstruction signals likely to be extremely inaccurate, and using the amplitude information converted from such power value will directly affect the performance of interference cancellation.

Preferably, in the above method, Step 101 includes: acquiring a first soft symbol of the DPCCH after MRC; acquiring a result after a hard decision is carried out on a non-pilot bit of the DPCCH, acquiring a known pilot bit of the DPCCH, and setting the result after the hard decision and the known pilot bit together as a first information bit; calculating product of the first soft symbol and the first information bit to calculate the first depolarized soft symbol; and calculating the average value of the first depolarized soft symbol to calculate the first amplitude average value.

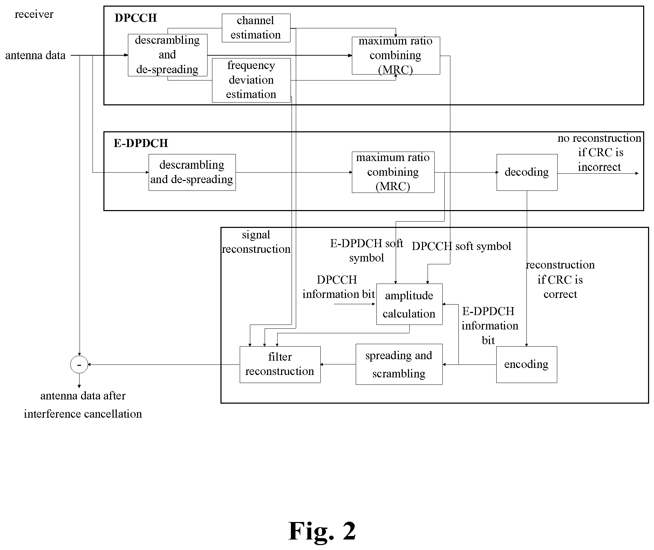

Fig. 2 is a schematic diagram of interference cancellation according to a second embodiment of the present invention, and all the functions shown by the blocks in this embodiment are completed at the receiver, which include the following functions: descrambling and de-spreading, channel estimation, frequency deviation estimation, maximum ratio combing (MRC), decoding, encoding, amplitude calculation, spreading and scrambling, filter reconstruction, etc. of multiple channels such as the DPCCH, the E-DPDCH, etc.

In conjunction with Fig. 2, according to this embodiment firstly a first soft symbol $x(k)$ of the DPCCH is acquired after carrying out descrambling and de-spreading on MRC, then a result is acquired after a hard decision is carried out on a non-pilot bit of the DPCCH and a known pilot bit of the DPCCH is acquired, and the result after the hard decision and the known pilot bit are set together as a first information bit $x(k)_{\_hard}$, finally multiplies $x(k)$ and $x(k)_{\_hard}$, the product $x(k)*x(k)_{\_hard}$ thereof is the first depolarized soft symbol, wherein the pilot bit is to use a known pilot bit and can be directly used; and non-pilot bit is to use the result after hard decision.

Preferably, in the above method, Step 102 includes: acquiring a second soft symbol of the E-DPDCH after MRC; acquiring correct data of the E-DPDCH after CRC and carrying out re-encoding on the correct data after the CRC to calculate a second information bit; and calculating product of the second soft symbol and the second information bit to calculate the second depolarized soft symbol; and calculating the average value of the second depolarized soft symbol to calculate the second amplitude average value.

In conjunction with Fig. 2, according to this embodiment first a second soft symbol $z(k)$ of the E-DPDCH is acquired after carrying out descrambling and de-spreading on MRC, then the correct data of E-DPDCH channel is acquired after the CRC and re-encoding is carried out to calculate a second information bit $z(k)_{\_reencoding}$, and finally $z(k)$ and $z(k)_{\_reencoding}$ are multiplied, wherein the product $z(k)*z(k)_{\_reencoding}$ thereof is the second depolarized soft symbol.

Preferably, in the above method, Step 103 includes: calculating a quotient of the first amplitude average value (first average value) and the second amplitude average value (second average value) ; and looking-up the Bed/Bc amplitude table in protocol 25.213 according to the quotient to calculate the amplitude of the E-DPDCH.

In this embodiment, firstly the first average value $Y_{dpcch}$ of the first depolarized soft symbol $x(k)*x(k)_{\_hard}$ is calculated according to Formula (1), then the second average value $Y_{e-dpdch}$ of the second depolarized soft symbol $z(k)*z(k)_{\_reencoding}$ is calculated according to Formula (2), and then the quotient $A_{ed}$ of the first average value and the second average value is calculated according to Formula (3), finally the Bed/Bc amplitude table in the protocol is looked-up according to $A_{ed}$ to calculate the amplitude of the E-DPDCH, wherein the calculation formulas related are as follows:

$$Y_{dpcch} = \frac{1}{N} * \sum_{n=1}^{N} x(k)*x(k)_{\_hard} , \qquad (1)$$

$$Y_{e-dpdch} = \frac{1}{N} \sum_{n=1}^{N} z(k)*z(k)_{\_reencoding} , \qquad (2)$$

$$A_{ed} = \frac{Y_{e-dpdch}}{Y_{dpcch}} \circ \qquad (3)$$

Preferably, in the above method, the step 104 further includes: carrying out signal reconstruction to calculate a reconstruction signal for cancelling interference according to a channel estimation value and a frequency deviation estimation value of the DPCCH, a result of the second information bit after spreading and scrambling and the amplitude of the E-DPDCH. Preferably, when reconstructing, carrying out spreading and scrambling to the enhanced dedicated physical data channel according to the second information bit and spreading and scrambling information of the enhanced dedicated physical data channel; and calculating the reconstructed signal by filtering the data after spreading and scrambling with the channel estimation value, the frequency deviation estimation value of the dedicated physical control channel, and the amplitude of the E-DPDCH.

In conjunction with Fig. 2, according to this embodiment the channel estimation value of the DPCCH, the frequency deviation estimation value of the DPCCH, the result of $z(k)_{\_reencoding}$ after spreading and scrambling and the amplitude calculation result are used as the input for reconstructing filter to carry out signal reconstruction to calculate a reconstruction signal, wherein the reconstruction signal is used for cancelling the interference in the receiver antenna data. When the antenna data enter the receiver to be demodulated via a wireless environment, the information such as the channel estimation value, frequency deviation estimation value, first soft symbol, first information bit, etc. demodulated by the DPCCH channel is used for reconstruction; and for the E-DPDCH channel the second soft symbol and second information bit are also calculated after the similar steps, and then the soft symbols and information bits calculated over DPCCH and E-DPDCH channel are used as the input of amplitude calculation.

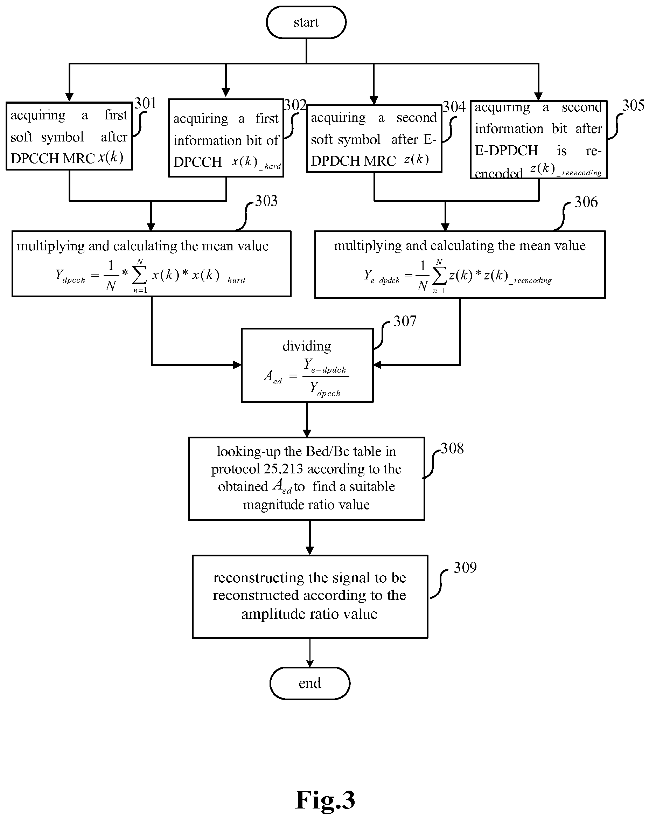

Fig. 3 is a flow chart of a method for signal reconstruction according to a third embodiment of the present invention, and this method includes the following steps:

Step 301: acquiring a first soft symbol $x(k)$ of the DPCCH after carrying out descrambling and de-spreading on MRC;
Step 302: acquiring a result after a hard decision is carried out on a non-pilot bit of the DPCCH, acquiring a known pilot bit of the DPCCH, and setting the result after the hard decision and the known pilot bit together as a first information bit $x(k)_{\_hard}$;
Step 303: multiplying the soft symbol $x(k)$ of the DPCCH channel and the result $x(k)_{\_hard}$ of non-pilot bit after hard decision and pilot bit, and calculating the average value thereof to calculate a first average value

$$Y_{dpcch} = \frac{1}{N} * \sum_{n=1}^{N} x(k) * x(k)_{\_hard}$$ (i.e. Formula (1));

Step 304: acquiring a second soft symbol $z(k)$ of the E-DPDCH after carrying out descrambling and de-spreading on MRC;
Step 305: re-encoding the correct data of the E-DPDCH channel after the CRC to calculate a second information bit $z(k)_{\_reencoding}$, and the step of re-encoding needs to go through the following steps: adding a CRC check code, code block segmentation, channel encoding, code block collection, rate match, physical channel segmentation, and interleaving;
Step 306: multiplying the soft symbol $z(k)$ of the E-DPDCH channel and the value $z(k)_{\_reencoding}$ of the E-DPDCH after re-encoding and calculating the average value to calculate the second average value

$$Y_{e-dpdch} = \frac{1}{N} \sum_{n=1}^{N} z(k) * z(k)_{\_reencoding}$$ (i.e. Formula (2));

Step 307: dividing $Y_{dpcch}$ by $Y_{e-dpdch}$ to calculate the quotient, wherein the quotient $A_{ed} = \dfrac{Y_{e-dpdch}}{Y_{dpcch}}$ thereof (i.e. formula (3));
Step 308: looking-up the Bed/Bc table in protocol 25.213 according to $A_{ed}$ to find a suitable amplitude ratio value (i.e., the amplitude of the E-DPDCH, or the amplitude offset); and
Step 309: reconstructing the E-DPDCH according to the amplitude ratio value.

The implementation of the amplitude calculation method in this embodiment is simple, the hardware resource consumption is rather little, and the adaptability and accuracy rate of amplitude calculation are improved, which is helpful to improve the accuracy rate of signal reconstruction and the performance of interference cancellation.

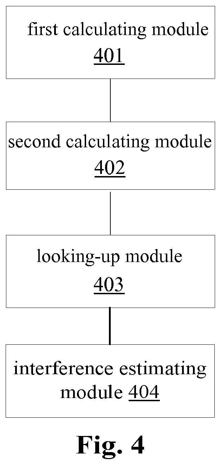

Fig. 4 is a structural diagram of an apparatus for signal reconstruction according to a fourth embodiment of the present invention, wherein the apparatus comprises:

a first calculating module **401** for calculating a first depolarized soft symbol of a DPCCH according to the information of the DPCCH demodulated by a receiver, and calculating an average value of the first depolarized soft symbol to calculate a first amplitude average value;
a second calculating module **402** for calculating a second depolarized soft symbol of an E-DPDCH according to the information of the E-DPDCH demodulated by a receiver, and calculating an average value of the second depolarized soft symbol to calculate a second amplitude average value;
a looking-up module **403** for calculating an amplitude of the E-DPDCH (also can be called amplitude ratio value, or amplitude offset) according to the first amplitude average value and the second amplitude average value; and
an interference estimating module **404** for reconstructing the E-DPDCH according to the amplitude of the E-DPDCH.

In this embodiment, firstly the first calculating module **401** is used to calculate the first depolarized soft symbol and the first amplitude average value of the DPCCH according to the DPCCH information after being demodulated by the receiver, then the second calculating module **402** is used to calculate the second depolarized soft symbol and the second amplitude average value of the E-DPDCH according to the E-DPDCH information after being demodulated by the receiver, finally the looking-up module **403** is used for calculating the amplitude of the E-DPDCH according to the first amplitude average value and the second amplitude average value; and thereby the interference estimating module **404** is used for reconstructing the E-DPDCH according to the amplitude of the E-DPDCH. Since the amplitudes of the DPCCH and the E-DPDCH already have deviation when they are transmitted at the transmitter, soft symbols received by the receiver are used to estimate the amplitudes thereof, and this method can also be used for the amplitude calculation under more application scenarios, so the adaptability and accuracy rate of amplitude calculation can be improved and the accuracy rate of signal reconstruction and the performance of interference cancellation can be improved. Therefore, the problem in the related art that, if channel estimation of DPCCH is used to reconstruct signal, the accuracy of signal reconstruction may be rather poor, which is disadvantageous for cancelling interference, is solved.

Preferably, in the above apparatus, the first calculating module **401** includes: a first soft symbol for acquiring unit for acquiring a first soft symbol of the DPCCH after MRC; a first information bit acquiring unit for acquiring a result after a hard decision is carried out on a non-pilot bit of the DPCCH, acquiring a known pilot bit of the DPCCH, and setting the result after the hard decision and the known pilot bit together as a first information bit; a first depolarized soft symbol calculating unit for calculating product of the first soft symbol and the first information bit to calculate the first depolarized soft symbol; and a first amplitude average value calculating unit for calculating the average value of the first depolarized soft symbol to calculate the first amplitude average value.

In conjunction with Fig. 2, according to this embodiment firstly a first soft symbol $x(k)$ of the DPCCH is acquired after carrying out descrambling and de-spreading on MRC, then a result is acquired after a hard decision is carried out on a non-pilot bit of the DPCCH and a known pilot bit of the DPCCH is acquired, and the result after the hard decision and the known pilot bit are set together as a first information bit $x(k)_{hard}$, finally multiplies $x(k)$ and $x(k)_{hard}$, the product $x(k)*x(k)_{hard}$ thereof is the first depolarized soft symbol, wherein the pilot bit is to use a known pilot bit and can be directly used; and non-pilot bit is to use the result after hard decision.

Preferably, in the above apparatus, the second calculating module 402 includes: a second soft symbol acquiring unit for acquiring a second soft symbol of the E-DPDCH after MRC; a second information bit acquiring unit for acquiring correct data of the E-DPDCH after CRC and carrying out re-encoding on the correct data after the CRC to calculate a second information bit; a second depolarized soft symbol calculating unit for calculating product of the second soft symbol and the second information bit to calculate the second depolarized soft symbol; and a second amplitude average value calculating unit for calculating the average value of the second depolarized soft symbol to calculate the second amplitude average value.

In conjunction with Fig. 2, according to this embodiment first a second soft symbol $z(k)$ of the E-DPDCH is acquired after carrying out descrambling and de-spreading on MRC, then the correct data of E-DPDCH channel is acquired after the CRC and re-encoding is carried out to calculate a second information bit $z(k)_{reencoding}$, and finally $z(k)$ and $z(k)_{reencoding}$ are multiplied, wherein the product $z(k)*z(k)_{reencoding}$ thereof is the second depolarized soft symbol.

In conjunction with Fig. 2, When the antenna data enter the receiver to be demodulated via a wireless environment, the information such as the channel estimation value, frequency deviation estimation value, first soft symbol, first information bit, etc. demodulated by the DPCCH channel is used for reconstruction; and for the E-DPDCH channel the second soft symbol and second information bit are also calculated after the similar steps, and then the soft symbols and information bits calculated over DPCCH and E-DPDCH channel are used as the input of the apparatus for amplitude calculation.

Preferably, in the above apparatus, the looking-up module **403** includes: a quotient calculating unit for calculating a quotient by dividing the second amplitude average value by the first amplitude average value; and an amplitude table looking-up unit for looking-up the Bed/Bc amplitude table in protocol 25.213 according to the quotient to calculate the amplitude of the E-DPDCH.

In this embodiment, firstly the first average value $Y_{dpcch}$ of the first depolarized soft symbol $x(k)*x(k)_{hard}$ is calculated according to Formula (1), then the second average value $Y_{e\text{-}dpdch}$ of the second depolarized soft symbol $z(k)*z(k)_{reencoding}$ is calculated according to Formula (2), and then the quotient $A_{ed}$ of the first average value and the second average value is calculated according to Formula (3), finally the Bed/Bc amplitude table in the protocol 25.213 is looked-up according to $A_{ed}$ to calculate the amplitude of the E-DPDCH.

Preferably, in the above apparatus, the interference estimating module **404** is used for carrying out signal reconstruction to calculate the E-DPDCH for cancelling interference according to a channel estimation value and a frequency deviation estimation value of the DPCCH, a result of the second information bit after spreading and scrambling and the amplitude of the E-DPDCH. Preferably, the interference estimating module **404** is used for carrying out spreading and scrambling to the enhanced dedicated physical data channel according to the second information bit and spreading and scrambling information of the enhanced dedicated physical data channel; and calculating the reconstructed signal by filtering the data after spreading and scrambling with the channel estimation value, the frequency deviation estimation value of the dedicated physical control channel, and the amplitude of the E-DPDCH.

In conjunction with Fig. 2, according to this embodiment the channel estimation value of the DPCCH, the frequency deviation estimation value of the DPCCH, the result of $z(k)_{reencoding}$ after spreading and scrambling and the amplitude calculation result are used as the input for reconstructing filter to carry out signal reconstruction to calculate the E-DPDCH, wherein the reconstruction signal is used for cancelling the interference in the receiver antenna data.

It can be seen from the above description that the above embodiments of the present invention improve the adaptability and accuracy rate of amplitude calculation, which is helpful to improve the accuracy rate of signal reconstruction and improve the performance of interference cancellation.

Apparently, those skilled in the art shall understand that the above-mentioned modules and steps of the present invention can be realized by using general purpose calculating device, can be integrated in one calculating device or distributed on a network which consists of a plurality of calculating devices, and alternatively the modules and the steps of the present invention can be realized by using the executable program code of the calculating device, Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

Industry Practicability

In the solution of the present invention, firstly a first depolarized soft symbol and a first amplitude average value of DPCCH are calculated, then a second depolarized soft symbol and a second amplitude average value of E-DPDCH are calculated, finally an amplitude of the E-DPDCH is calculated according to the first amplitude average value and second amplitude average value, and thereby signal reconstruction is carried out according to the amplitude of the E-DPDCH. Since the amplitudes of the DPCCH and the E-DPDCH already have deviation when they are transmitted at the transmitter, soft symbols received by the receiver are used to estimate the amplitudes thereof, and this method can also be used for the amplitude calculation under more application scenarios, so the adaptability and accuracy rate of amplitude calculation can be improved and the accuracy rate of signal reconstruction and the performance of interference cancellation can be improved. Therefore, the problem in the related art that, if channel estimation of DPCCH is used to reconstruct signal, the accuracy of signal reconstruction may be rather poor, which is disadvantageous for cancelling interference, is solved.

**Claims**

1.  A method for signal reconstruction, comprising the steps of:

    calculating a first depolarized soft symbol of a dedicated physical control channel according to information of the dedicated physical control channel demodulated by a receiver (101);
    calculating a first amplitude average value according to an average value of the first depolarized soft symbol (101);
    calculating a second depolarized soft symbol of an Enhanced Dedicated Physical Data Channel, E-DPDCH, according to information of the E-DPDCH demodulated by the receiver (102);
    calculating a second amplitude average value according to an average value of the second depolarized soft symbol (102);
    looking up a Bed/Bc amplitude table to calculate an amplitude of the E-DPDCH according to the first amplitude average value and the second amplitude average value (103); and
    carrying out signal reconstruction to calculate a reconstruction signal according to a channel estimation value and a frequency deviation estimation value of the dedicated physical control channel, a result of the second information bit after spreading and scrambling and the amplitude of the E-DPDCH,
    wherein the step of calculating the first depolarized soft symbol of the dedicated physical control channel according to the information of the dedicated physical control channel demodulated by the receiver comprises the steps of:

        acquiring a first soft symbol of the dedicated physical control channel after maximum ratio combining;
        acquiring a result after a hard decision is carried out on a non-pilot bit of the dedicated physical control channel, acquiring a known pilot bit of the dedicated physical control channel, and setting the result after the hard decision and the known pilot bit together as a first information bit; and
        calculating the first depolarized soft symbol according to a product of the first soft symbol and the first information bit,

    wherein the step of calculating the second depolarized soft symbol of the enhanced dedicated physical control channel according to the information of the E-DPDCH demodulated by the receiver comprises the steps of:

        acquiring a second soft symbol of the E-DPDCH after maximum ratio combining;

acquiring correct data of the E-DPDCH after cyclic redundancy check and carrying out re-encoding on the correct data after the cyclic redundancy check to calculate a second information bit; and

calculating the second depolarized soft symbol according to product of the second soft symbol and the second information bit.

2. The method according to claim 1, wherein the step of calculating the amplitude of the E-DPDCH according to the first amplitude average value and the second amplitude average value comprises the steps of:

calculating a quotient of the second amplitude average value and the first amplitude average value; and

looking-up the Bed/Bc amplitude table according to the quotient to calculate the amplitude of the E-DPDCH.

3. The method according to claim 1, wherein carrying out signal reconstruction according to the channel estimation value and the frequency deviation estimation value of the dedicated physical control channel, the result of the second information bit after spreading and scrambling and the amplitude of the E-DPDCH comprises the steps of:

carrying out spreading and scrambling to the E-DPDCH according to the second information bit and spreading and scrambling information of the E-DPDCH; and

calculating the reconstructed signal by filtering the data after spreading and scrambling with the channel estimation value, the frequency deviation estimation value of the dedicated physical control channel, and the amplitude of the E-DPDCH.

4. An apparatus for signal reconstruction, comprising:

a first calculating module (401) for calculating a first depolarized soft symbol of a dedicated physical control channel according to information of the dedicated physical control channel demodulated by a receiver, and calculating a first amplitude average value according to an average value of the first depolarized soft symbol;

a second calculating module (402) for calculating a second depolarized soft symbol of an E-DPDCH according to information of the Enhanced Dedicated Physical Data Channel, E-DPDCH, demodulated by the receiver, and calculating a second amplitude average value according to an average value of the second depolarized soft symbol;

a looking-up module (403) for looking up a Bed/Bc amplitude table to calculate an amplitude of the E-DPDCH according to the first amplitude average value and the second amplitude average value; and

an interference estimating module for carrying out signal reconstruction to calculate a reconstruction signal according to a channel estimation value and a frequency deviation estimation value of the dedicated physical control channel, a result of the second information bit after spreading and scrambling and the amplitude of the E-DPDCH,

wherein the first calculating module comprises:

a first soft symbol acquiring unit for acquiring a first soft symbol of the dedicated physical control channel after maximum ratio combining;

a first information bit acquiring unit for acquiring a result after a hard decision is carried out on a non-pilot bit of the dedicated physical control channel, acquiring a known pilot bit of the dedicated physical control channel, and setting the result after the hard decision and the known pilot bit together as a first information bit;

a first depolarized soft symbol calculating unit for calculating the first depolarized soft symbol according to a product of the first soft symbol and the first information bit; and

a first amplitude average value calculating unit for calculating the average value of the first depolarized soft symbol to calculate the first amplitude average value,

and wherein the second calculating module comprises:

a second soft symbol acquiring unit for acquiring a second soft symbol of the dedicated physical data channel after maximum ratio combining;

a second information bit acquiring unit for acquiring correct data of the E-DPDCH after cyclic redundancy check and carrying out re-encoding on the correct data after the cyclic redundancy check to calculate a second information bit;

a second depolarized soft symbol calculating unit for calculating the second depolarized soft symbol according to product of the second soft symbol and the second information bit; and

a second amplitude average value calculating unit for calculating the average value of the second depolarized soft symbol to calculate the second amplitude average value.

5. The apparatus according to claim 4, wherein the looking-up module comprises:

a quotient calculating unit for calculating a quotient of the second amplitude average value and the first amplitude average value; and
an amplitude table looking-up unit for looking-up the Bed/Bc amplitude table according to the quotient to calculate the amplitude of the E-DPDCH.

6. The apparatus according to claim 4, wherein:
the interference estimating module is used for carrying out spreading and scrambling to the E-DPDCH according to the second information bit and spreading and scrambling information of the E-DPDCH; and calculating the reconstructed signal by filtering the data after spreading and scrambling with the channel estimation value, the frequency deviation estimation value of the dedicated physical control channel, and the amplitude of the E-DPDCH.


**Patentansprüche**

1. Verfahren zur Signalwiederherstellung, die folgenden Schritte umfassend:

Berechnen eines ersten depolarisierten Softsymbols eines zugeordneten physischen Steuerkanals entsprechend einer durch einen Empfänger (101) demodulierten Information des zugeordneten physischen Steuerkanals;
Berechnen eines ersten Amplitudenmittelwerts entsprechend einem Mittelwert des ersten depolarisierten Softsymbols (101) ;
Berechnen eines zweiten depolarisierten Softsymbols eines erweiterten zugeordneten physischen Datenkanals, E-DPDCH, entsprechend einer durch den Empfänger (102) demodulierten Information des E-DPDCH;
Berechnen eines zweiten Amplitudenmittelwerts entsprechend einem Mittelwert des zweiten depolarisierten Softsymbols (102);
Nachschlagen in einer Bed/Bc Amplitudentabelle zum Berechnen einer Amplitude des E-DPDCH entsprechend dem ersten Amplitudenmittelwert und dem zweiten Amplitudenmittelwert (103); und
Durchführen einer Signalwiederherstellung zum Berechnen eines Wiederherstellungssignals entsprechend einem Kanalschätzwert und einem Frequenzabweichungsschätzwert des zugeordneten physischen Steuerkanals, eines Ergebnisses des zweiten Informationsbits nach dem Streuen und Verschlüsseln und der Amplitude des E-DPDCH,
wobei der Schritt des Berechnens des ersten depolarisierten Softsymbols des zugeordneten physischen Steuerkanals entsprechend der durch den Empfänger demodulierten Information des zugeordneten physischen Steuerkanals die folgenden Schritte umfasst:

Akquirieren eines ersten Softsymbols des zugeordneten physischen Steuerkanals nach dem Kombinieren des maximalen Verhältnisses;
Akquirieren eines Ergebnisses nachdem eine harte Entscheidung auf einem Nicht-Pilotbit des zugeordneten physischen Steuerkanals durchgeführt worden ist, Akquirieren eines bekannten Pilotbits des zugeordneten physischen Steuerkanals, und Zusammenfassen des Ergebnisses nach der harten Entscheidung und des bekannten Pilotbits als erstes Informationsbit; und
Berechnen eines ersten depolarisierten Softsymbols entsprechend einem Produkt des ersten Softsymbols und des ersten Informationsbits,
wobei der Schritt des Berechnens des zweiten depolarisierten Softsymbols des erweiterten zugeordneten physischen Steuerkanals entsprechend der durch den Empfänger demodulierten Information des E-DPDCH die folgenden Schritte umfasst:

Akquirieren eines zweiten Softsymbols des E-DPDCH nach dem Kombinieren des maximalen Verhältnisses;
Akquirieren der korrekten Daten des E-DPDCH nach einer zyklischen Redundanzüberprüfung und Durchführen einer erneuten Codierung der korrekten Daten nach der zyklischen Redundanzüberprüfung zum Berechnen eines zweiten Informationsbits; und
Berechnen des zweiten depolarisierten Softsymbols entsprechend dem Produkt des zweiten Softsymbols und des zweiten Informationsbits.

2. Verfahren nach Anspruch 1, wobei der Schritt des Berechnens der Amplitude des E-DPDCH entsprechend dem ersten Amplitudenmittelwert und dem zweiten Amplitudenmittelwert die folgenden Schritte umfasst:

Berechnen eines Quotienten des zweiten Amplitudenmittelwerts und des ersten Amplitudenmittelwerts; und Nachschlagen in der Bed/Bc Amplitudentabelle entsprechend dem Quotienten zum Berechnen der Amplitude des E-DPDCH.

3. Verfahren nach Anspruch 1, wobei das Durchführen einer Signalwiederherstellung entsprechend dem Kanalschätzwert und dem Frequenzabweichungsschätzwert des zugeordneten physischen Steuerkanals, des Ergebnisses des zweiten Informationsbits nach dem Streuen und Verschlüsseln und der Amplitude des E-DPDCH die folgenden Schritte umfasst:

Durchführen des Streuens und Verschlüsselns des E-DPDCH entsprechend dem zweiten Informationsbit und Streuen und Verschlüsseln einer Information des E-DPDCH; und Berechnen des wiederhergestellten Signals durch Filtern der Daten nach dem Streuen und Verschlüsseln mit dem Kanalschätzwert, dem Frequenzabweichungsschätzwert des zugeordneten physischen Steuerkanals, und der Amplitude des E-DPDCH.

4. Vorrichtung zur Signalwiederherstellung, umfassend:

ein erstes Berechnungsmodul (401) zum Berechnen eines ersten depolarisierten Softsymbols eines zugeordneten physischen Steuerkanals entsprechend einer durch einen Empfänger demodulierten Information des zugeordneten physischen Steuerkanals, und Berechnen eines ersten Amplitudenmittelwerts entsprechend einem Mittelwert des ersten depolarisierten Softsymbols;
ein zweites Berechnungsmodul (402) zum Berechnen eines zweiten depolarisierten Softsymbols eines E-DPDCH entsprechend einer durch den Empfänger demodulierten Information eines erweiterten zugeordneten physischen Datenkanals, E-DPDCH, und Berechnen eines zweiten Amplitudenmittelwerts entsprechend einem Mittelwert des zweiten depolarisierten Softsymbols;
ein Nachschlagmodul (403) zum Nachschlagen in einer Bed/Bc Amplitudentabelle zum Berechnen einer Amplitude des E-DPDCH entsprechend dem ersten Amplitudenmittelwert und dem zweiten Amplitudenmittelwert; und
ein Interferenzschätzmodul zum Durchführen einer Signalwiederherstellung zum Berechnen eines Wiederherstellungssignals entsprechend einem Kanalschätzwert und einem Frequenzabweichungsschätzwert des zugeordneten physischen Steuerkanals, eines Ergebnisses des zweiten Informationsbits nach dem Streuen und Verschlüsseln und der Amplitude des E-DPDCH,
wobei das erste Berechnungsmodul umfasst:

eine erste Softsymbol-Akquirierungseinheit zum Akquirieren eines ersten Softsymbols des zugeordneten physischen Steuerkanals nach dem Kombinieren eines maximalen Verhältnisses;
eine erste Informationsbit-Akquirierungseinheit zum Akquirieren eines Ergebnisses nachdem eine harte Entscheidung auf einem Nicht-Pilotbit des zugeordneten physischen Steuerkanals durchgeführt worden ist, Akquirieren eines bekannten Pilotbits des zugeordneten physischen Steuerkanals, und Zusammenfassen des Ergebnisses nach der harten Entscheidung und des bekannten Pilotbits als ein erstes Informationsbit;
eine erste Berechnungseinheit eines ersten depolarisierten Softsymbols zum Berechnen des ersten depolarisierten Softsymbols entsprechend einem Produkt des ersten Softzymbols und des ersten Informationsbits; und
eine erste Berechnungseinheit eines ersten Amplitudenmittelwerts zum Berechnen des Mittelwerts des ersten depolarisierten Softsymbols zum Berechnen des ersten Amplitudenmittelwerts,
und wobei das zweite Berechnungsmodul umfasst:

eine zweite Softsymbol-Akquirierungseinheit zum Akquirieren eines zweiten Softsymbols des zugeordneten physischen Datenkanals nach dem Kombinieren eines maximalen Verhältnisses;
eine zweite Informationsbit-Akquirierungseinheit zum Akquirieren von korrekten Daten des E-DPDCH nach einer zyklischen Redundanzüberprüfung und Durchführen einer erneuten Codierung der korrekten Daten nach der zyklischen Redundanzüberprüfung zum Berechnen eines zweiten Informationsbits;
eine zweite Berechnungseinheit eines zweiten depolarisierten Softsymbols zum Berechnen des zweiten depolarisierten Softsymbols entsprechend einem Produkt des zweiten Softsymbols und des zweiten Informationsbits; und

eine zweite Berechnungseinheit eines zweiten Amplitudenmittelwerts zum Berechnen des Mittelwerts des zweiten depolarisierten Softsymbols zum Berechnen des zweiten Amplitudenmittelwerts.

**5.** Vorrichtung nach Anspruch 4, wobei das Nachschlagmodul umfasst:

eine Quotienten-Berechnungseinheit zum Berechnen eines Quotienten des zweiten Amplitudenmittelwerts und des ersten Amplitudenmittelwerts; und

eine Amplitudentabellen-Nachschlageinheit zum Nachschlagen der Bed/Bc Amplitudentabelle entsprechend dem Quotienten zum Berechnen der Amplitude des E-DPDCH.

**6.** Vorrichtung nach Anspruch 4, wobei:

das Interferenzschätzmodul zum Durchführen von Streuen und Verschlüsseln des E-DPDCH entsprechend dem zweiten Informationsbit und Streuen und Verschlüsseln einer Information des E-DPDCH verwendet wird; und Berechnen des wiederhergestellten Signals durch Filtern der Daten nach dem Streuen und Verschlüsseln mit dem Kanalschätzwert, des Frequenzabweichungsschätzwerts des zugeordneten physischen Steuerkanals, und der Amplitude des E-DPDCH.

## Revendications

**1.** Procédé de reconstruction de signal, comprenant les étapes consistant à :

calculer un premier symbole souple dépolarisé d'un canal physique de commande dédié selon des informations du canal physique de commande dédié démodulées par un récepteur (101) ;

calculer une première valeur moyenne d'amplitude selon une valeur moyenne du premier symbole souple dépolarisé (101) ;

calculer un second symbole souple dépolarisé d'un canal physique de données dédié amélioré, E-DPDCH, selon des informations de l'E-DPDCH démodulées par le récepteur (102) ;

calculer une seconde valeur moyenne d'amplitude selon une valeur moyenne du second symbole souple dépolarisé (102) ;

consulter une table d'amplitudes Bed/Bc pour calculer une amplitude de l'E-DPDCH selon la première valeur moyenne d'amplitude et la seconde valeur moyenne d'amplitude (103) ; et

exécuter une reconstruction de signal pour calculer un signal de reconstruction selon une valeur d'estimation de canal et une valeur d'estimation d'excursion de fréquence du canal physique de commande dédié, un résultat du second bit d'information après étalement et embrouillage et l'amplitude de l'E-DPDCH,

dans lequel l'étape de calcul du premier symbole souple dépolarisé du canal physique de commande dédié selon les informations du canal physique de commande dédié démodulées par le récepteur comprend les étapes consistant à :

acquérir un premier symbole souple du canal physique de commande dédié après combinaison de taux maximal ;

acquérir un résultat après qu'une décision inconditionnelle est exécutée sur un bit non-pilote du canal physique de commande dédié, acquérir un bit pilote connu du canal physique de commande dédié, et mettre ensemble le résultat après la décision inconditionnelle et le bit pilote connu en tant que premier bit d'information ; et

calculer le premier symbole souple dépolarisé selon un produit du premier symbole souple et du premier bit d'information,

dans lequel l'étape de calcul du second symbole souple dépolarisé du canal physique de commande dédié amélioré selon les informations de l'E-DPDCH démodulées par le récepteur comprend les étapes consistant à :

acquérir un second symbole souple de l'E-DPDCH après une combinaison de taux maximal ;

acquérir des données correctes de l'E-DPDCH après un contrôle par redondance cyclique et exécuter un recodage sur les données correctes après le contrôle par redondance cyclique pour calculer un second bit d'information ; et

calculer le second symbole souple dépolarisé selon le produit du second symbole souple et du second bit d'information.

**2.** Procédé selon la revendication 1, dans lequel l'étape de calcul de l'amplitude de l'E-DPDCH selon la première valeur moyenne d'amplitude et la seconde valeur moyenne d'amplitude comprend les étapes consistant à :

calculer un quotient de la seconde valeur moyenne d'amplitude et de la première valeur moyenne d'amplitude ; et
consulter la table d'amplitudes Bed/Bc selon le quotient pour calculer l'amplitude de l'E-DPDCH.

**3.** Procédé selon la revendication 1, dans lequel l'exécution de la reconstruction de signal selon la valeur d'estimation de canal et la valeur d'estimation d'excursion de fréquence du canal physique de commande dédié, le résultat du second bit d'information après étalement et embrouillage et l'amplitude de l'E-DPDCH comprend les étapes consistant à :

exécuter un étalement et un embrouillage pour l'E-DPDCH selon le second bit d'information et des informations d'étalement et d'embrouillage de l'E-DPDCH ; et
calculer le signal reconstruit par filtrage des données après étalement et embrouillage avec la valeur d'estimation de canal, la valeur d'estimation d'excursion de fréquence du canal physique de commande dédié et l'amplitude de l'E-DPDCH.

**4.** Appareil de reconstruction de signal, comprenant :

un premier module de calcul (401) pour calculer un premier symbole souple dépolarisé d'un canal physique de commande dédié selon des informations du canal physique de commande dédié démodulées par un récepteur, et calculer une première valeur moyenne d'amplitude selon une valeur moyenne du premier symbole souple dépolarisé ;
un second module de calcul (402) pour calculer un second symbole souple dépolarisé d'un E-DPDCH selon des informations du canal physique de données dédié amélioré, E-DPDCH, démodulées par le récepteur, et calculer une seconde valeur moyenne d'amplitude selon une valeur moyenne du second symbole souple dépolarisé ;
un module de consultation (403) pour consulter une table d'amplitudes Bed/Bc pour calculer une amplitude de l'E-DPDCH selon la première valeur moyenne d'amplitude et la seconde valeur moyenne d'amplitude ; et
un module d'estimation d'interférences pour exécuter une reconstruction de signal pour calculer un signal de reconstruction selon une valeur d'estimation de canal et une valeur d'estimation d'excursion de fréquence du canal physique de commande dédié, un résultat du second bit d'information après étalement et embrouillage et l'amplitude de l'E-DPDCH,
dans lequel le premier module de calcul comprend :

une première unité d'acquisition de symbole souple pour acquérir un premier symbole souple du canal physique de commande dédié après une combinaison de taux maximal ;
une première unité d'acquisition de bit d'information pour acquérir un résultat après qu'une décision inconditionnelle est exécutée sur un bit non-pilote du canal physique de commande dédié, acquérir un bit pilote connu du canal physique de commande dédié, et mettre ensemble le résultat après la décision inconditionnelle et le bit pilote connu en tant que premier bit d'information ;
une première unité de calcul de symbole souple dépolarisé pour calculer le premier symbole souple dépolarisé selon un produit du premier symbole souple et du premier bit d'information ; et
une première unité de calcul de valeur moyenne d'amplitude pour calculer la valeur moyenne du premier symbole souple dépolarisé pour calculer la première valeur moyenne d'amplitude,
et dans lequel le second module de calcul comprend :

une seconde unité d'acquisition de symbole souple pour acquérir un second symbole souple du canal physique de données dédié après une combinaison de taux maximal ;
une seconde unité d'acquisition de bit d'information pour acquérir des données correctes de l'E-DPDCH après un contrôle par redondance cyclique et exécuter un recodage sur les données correctes après le contrôle par redondance cyclique pour calculer un second bit d'information ;
une seconde unité de calcul de symbole souple dépolarisé pour calculer le second symbole souple dépolarisé selon le produit du second symbole souple et du second bit d'information ; et
une seconde unité de calcul de valeur moyenne d'amplitude pour calculer la valeur moyenne du second symbole souple dépolarisé pour calculer la seconde valeur moyenne d'amplitude.

**5.** Appareil selon la revendication 4, dans lequel le module de consultation comprend :

une unité de calcul de quotient pour calculer un quotient de la seconde valeur moyenne d'amplitude et de la première valeur moyenne d'amplitude ; et

une unité de consultation de table d'amplitudes pour consulter la table d'amplitudes Bed/Bc selon le quotient pour calculer l'amplitude de l'E-DPDCH.

6. Appareil selon la revendication 4, dans lequel :

le module d'estimation d'interférences est utilisé pour exécuter un étalement et un embrouillage pour l'E-DPDCH selon le second bit d'information et des informations d'étalement et d'embrouillage de l'E-DPDCH ; et pour calculer le signal reconstruit par filtrage des données après étalement et embrouillage avec la valeur d'estimation de canal, la valeur d'estimation d'excursion de fréquence du canal physique de commande dédié et l'amplitude de l'E-DPDCH.

start

obtaining a first depolarized soft symbol of a DPCCH according to the information of the DPCCH demodulated by a receiver, and calculating an average value of the first depolarized soft symbol to obtain a first amplitude average value — 101

obtaining a second depolarized soft symbol of an E-DPDCH according to the information of the E-DPDCH demodulated by the receiver, and calculating an average value of the second depolarized soft symbol to obtain a second amplitude average value — 102

obtaining an amplitude of the E-DPDCH according to the first amplitude average value and the second amplitude average value — 103

reconstructing the E-DPDCH according to the amplitude of the E-DPDCH — 104

end

**Fig. 1**

receiver

**DPCCH**

antenna data

descrambling
and
de-spreading

channel
estimation

frequency
deviation
estimation

maximum ratio
combining
(MRC)

**E-DPDCH**

descrambling
and de-spreading

maximum ratio
combining
(MRC)

decoding

no reconstruction
if CRC is
incorrect

signal
reconstruction

E-DPDCH soft
symbol

DPCCH soft symbol

reconstruction
if CRC is
correct

DPCCH
information bit

amplitude
calculation

E-DPDCH
information
bit

filter
reconstruction

spreading and
scrambling

encoding

‒

antenna data after
interference cancellation

# Fig. 2

**Fig.3**

first calculating module
401

second calculating module
402

looking-up module
403

interference estimating
module 404

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008205329 A1
- EP 1962449 A1